# DEMANDE DE BREVET EUROPEEN

(11) **EP 0 668 661 A1**
(43) Date de publication de la demande: **23.08.1995**
(21) Numéro de dépôt: 95400361.2
(22) Date de dépôt: 21.02.1995
(51) Int. Cl.: H04B 1/44

(54) **Dispositif de correction de non-linéarité d'un amplificateur de sortie dans un système de transmission de données par ondes radio**

(30) Priorité: 22.02.1994 FR 9401985
(71) Demandeur: ALCATEL MOBILE COMMUNICATION FRANCE, 75008 Paris (FR)
(72) Inventeur: Thienpont, Jean-Marc, F-750017 Paris (FR); Auvray, Gérard, F-95870 Bezons (FR)
(74) Mandataire: El Manouni, Josiane

(57) **Abrégé**

Dispositif de correction de non linéarité d'un amplificateur de sortie dans un système de transmission de données comprenant un moyen d'émission (12), un amplificateur de puissance (14), et son circuit de boucle de réaction (16), et une antenne (10). Un moyen de commutation (20) est connecté entre la sortie de l'amplificateur et l'antenne, et prend une première position dans laquelle la sortie de l'amplificateur est connectée à l'antenne, et une seconde position dans laquelle la sortie de l'amplificateur est connectée à une impédance de charge dont la valeur correspond sensiblement à la valeur d'impédance de l'antenne, la commutation entre la première et la deuxième positions étant commandée par une unité de commande (18) lorsqu'un signal de linéarisation est envoyé à l'amplificateur de façon à ajuster les coefficients du circuit de boucle de réaction; de sorte qu'aucun signal n'est transmis vers l'antenne pendant la phase de linéarisation de l'amplificateur tout en maintenant une impédance sensiblement constante à la sortie de l'amplificateur.

## Description

La présente invention concerne la correction de la non linéarité des amplificateurs et en particulier un dispositif de correction de linéarité d'un amplificateur de sortie dans un système de transmission de données par ondes radio.

Les systèmes de communication de données qui se développent le plus actuellement concernent les systèmes modulaires comme les radiotéléphones du type GSM ou les systèmes de radio mobiles numériques. Dans ces derniers, il est de plus en plus fait appel à des modulations à enveloppe non constante du type QPSK où la modulation des données numériques se fait en utilisant plusieurs états de phases. Ce type de modulation présente l'avantage d'avoir un spectre réduit en émission, mais présente l'inconvénient de nécessiter un amplificateur de puissance linéaire. Malheureusement, un amplificateur linéaire a l'inconvénient d'avoir un rendement faible en comparaison à un amplificateur de puissance de classe C.

Il est donc prévu d'équiper les terminaux mobiles et portatifs avec des amplificateurs de puissance non linéaire ayant des rendements supérieurs aux amplificateurs linéaires classiques de classe A grâce à une boucle de contre réaction appelée aussi boucle de linéarisation. Les paramètres de cette boucle de linéarisation sont ajustés par un signal adéquat transmis pendant un intervalle de temps spécifique, ce qui permet à la station mobile recevant ce signal de linéariser son amplificateur de sortie. Mais l'émission d'un tel signal spécifique, non porteur d'informations, est gênante dans la mesure où il pollue le spectre radio émis, en particulier dans les systèmes où toutes les stations mobiles sont synchrones.

C'est pourquoi le but de l'invention est de réaliser un dispositif de correction de non linéarité d'un amplificateur de sortie d'un système de transmission de données par ondes radio, dans lequel aucun signal n'est transmis vers l'antenne pendant la phase de linéarisation de l'amplificateur, tout en maintenant une impédance sensiblement constante à la sortie de l'amplificateur.

Par conséquent, l'objet de l'invention est un dispositif de correction de non linéarité d'un amplificateur de sortie dans un système de transmission de données comprenant un moyen d'émission d'un signal porteur modulé par les données à transmettre, un amplificateur de puissance connecté à la sortie du moyen d'émission, un circuit de boucle de réaction connecté entre la sortie et l'entrée de l'amplificateur pour rendre linéaire la sortie de l'amplificateur, et une antenne connectée à la sortie de l'amplificateur pour transmettre par ondes radio les signaux fournis à la sortie de l'amplificateur. Le dispositif selon l'invention comprend en outre un moyen de commutation connecté entre la sortie de l'amplificateur et l'antenne, pouvant prendre une première position dans laquelle la sortie de l'amplificateur est connectée à l'antenne, et une seconde position dans laquelle la sortie de l'amplificateur est connectée à une impédance de charge dont la valeur correspond sensiblement à la valeur d'impédance de l'antenne, et une unité de commande pour simultanément commander la commutation du moyen de commutation de la première à la seconde position et commander l'envoi par le moyen d'émission d'un signal de linéarisation à l'amplificateur de façon à ajuster les coefficients du circuit de boucle de réaction.

Les buts, objets et caractéristiques de la présente invention seront mieux compris à la lecture de la description qui suit, faite en référence aux dessins dans lesquels :
la figure 1 est une représentation synoptique du dispositif selon l'invention,
la figure 2 montre un premier mode de réalisation du moyen de commutation utilisé dans le dispositif selon l'invention, et
la figure 3 montre un deuxième mode de réalisation du moyen de commutation utilisé dans le dispositif selon l'invention.

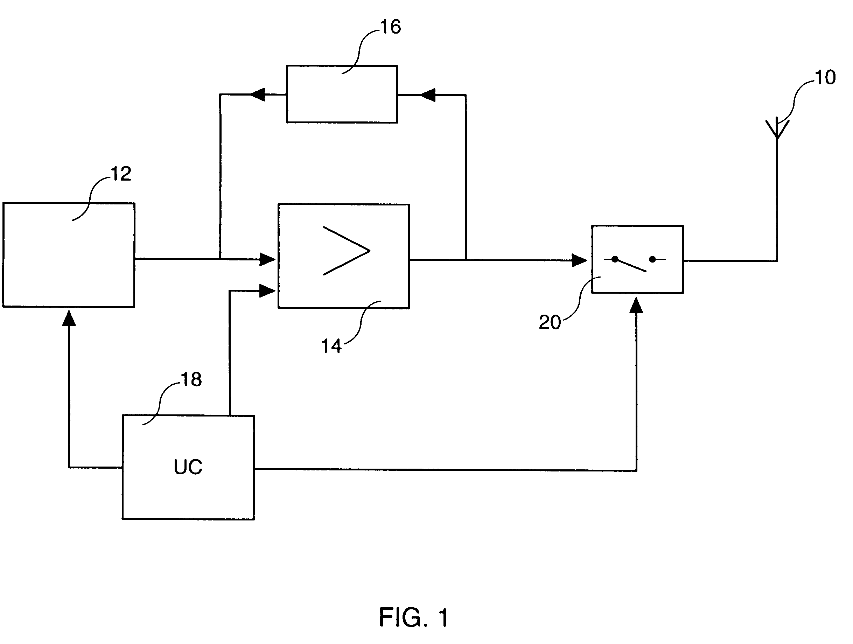

Comme représenté schématiquement sur la figure 1, le dispositif de l'invention est utilisé dans un système de communication de données du type radio mobile où les données sont émises au moyen d'ondes radio à partir d'une antenne 10 comportant une unité d'émission 12 d'un signal de fréquence porteuse modulé par les données qui n'est pas détaillé dans cette description comme ne faisant pas partie de l'invention.

Le signal transportant les données est fourni à un amplificateur de puissance 14. Comme le type de modulation utilisé, généralement la modulation de phase bien connue sous le nom QPSK, nécessite une amplification de puissance linéaire, un circuit de boucle de réaction 16, ou boucle de linéarisation, est connecté entre la sortie et l'entrée de l'amplificateur 14.

De façon à ajuster les paramètres du circuit de boucle de linéarisation 16, il est prévu de transmettre lorsque nécessaire, un signal de linéarisation à partir de l'unité d'émission 12. Pour ce faire, une unité de commande 18 connectée d'une part à l'unité d'émission 12 et d'autre part à l'amplificateur 14, conditionne l'amplificateur 14 en même temps qu'elle commande l'émission par l'unité d'émission 12 du signal de linéarisation.

Pendant la phase de linéarisation au cours de laquelle les paramètres du circuit de boucle de linéarisation sont ajustés, il est gênant de polluer le spectre radio émis par l'antenne 10 par le signal de linéarisation qui est typiquement une séquence bien particulière ayant des propriétés répétitives. C'est pourquoi un circuit de commutation 20 commandé par l'unité de commande 18 est interposé entre la sortie de l'amplificateur 14 et l'antenne 10.

Pendant la communication des signaux de données au moyen de l'antenne 10, le circuit de commutation 20 est dans une première position dans laquelle la sortie de l'amplificateur est connectée à l'antenne. Lorsque l'on procède à la phase de linéarisation de l'amplificateur 14, l'unité de commande 18 commande le passage du circuit de commutation 20 dans sa deuxième position dans laquelle la sortie de l'amplificateur est connectée à une impédance dont la valeur correspond sensiblement à celle de l'antenne 10. Ainsi, la charge à la sortie de l'amplificateur 14 est sensiblement la même, que le système soit en mode communication de données ou en phase de linéarisation sans qu'un signal soit rayonné par l'antenne 10 durant cette phase.

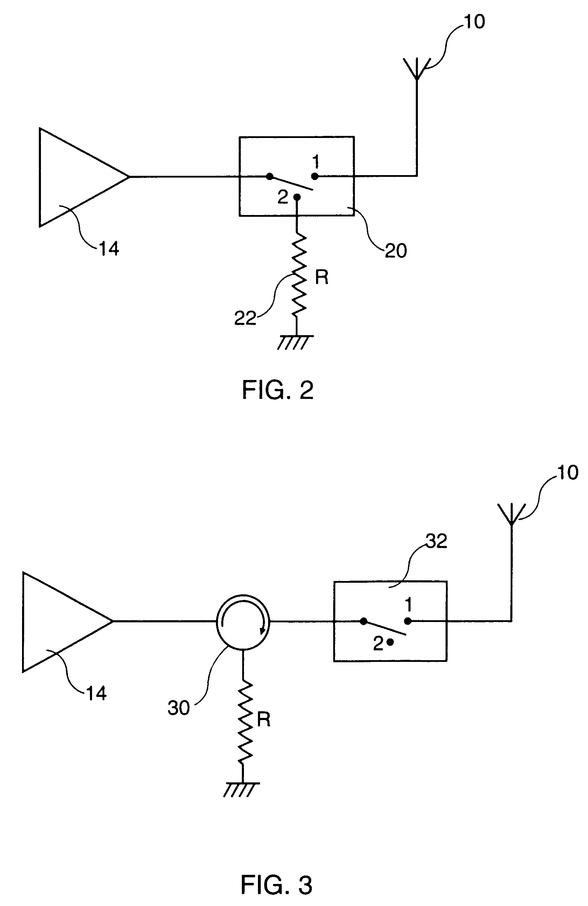

Le circuit de commutation peut être réalisé de la façon représentée sur la figure 2. Le circuit de commutation 20 comprend deux positions, une position 1 dans laquelle la sortie de l'amplificateur est connectée à l'antenne 10, et une position 2 commandée par l'unité de commande lorsque l'on désire procéder à la phase de linéarisation, dans laquelle la sortie de l'amplificateur est connectée à la masse par l'intermédiaire d'une résistance R 22 de valeur égale à l'impédance moyenne de l'antenne, c'est à dire approximativement 50 ohms. Dans ce mode de réalisation, le circuit de commutation 20 peut être un relais ou un commutateur réalisé à l'aide de diodes PIN.

Dans un deuxième mode de réalisation représenté sur la figure 3, le circuit de commutation est composé d'un circulateur 30 et d'un interrupteur 32 qui peut être par exemple une diode PIN. Le circulateur 30 est un composant électronique qui injecte le signal réfléchi par la sortie dans une résistance R reliée à la masse, de préférence d'une valeur sensiblement égale à celle de l'antenne, soit 50 ohms. En mode communication de données, l'interrupteur 32 est fermé et la plus grande part du signal de sortie de l'amplificateur est transmise à l'antenne 10. Lorsque l'on procède à la phase de linéarisation, l'interrupteur 32 est commandé en positon ouverte 2. le circulateur 30 dérive alors automatiquement le signal dans la résistance R. Par conséquent, grâce au circulateur 30, l'amplificateur voit sur sa sortie une charge constante égale à 50 ohms que le système soit en phase de linéarisation avec l'interrupteur 32 ouvert ou en mode de communication de données avec une antenne correctement adaptée ou non.

## Revendications

1. Dispositif de correction de non linéarité d'un amplificateur de sortie dans un système de transmission de données comprenant un moyen d'émission (12) d'un signal porteur modulé par les données à transmettre, un amplificateur de puissance (14) connecté à la sortie dudit moyen d'émission, un circuit de boucle de réaction (16) connecté entre la sortie et l'entrée dudit amplificateur pour rendre linéaire la sortie dudit amplificateur, et une antenne (10) connectée à la sortie dudit amplificateur pour transmettre par ondes radio les signaux fournis à la sortie dudit amplificateur ;
ledit dispositif étant caractérisé en ce qu'il comprend :
un moyen de commutation (20) connecté entre la sortie dudit amplificateur et ladite antenne, pouvant prendre une première position dans laquelle la sortie dudit amplificateur est connectée à ladite antenne, et une seconde position dans laquelle la sortie dudit amplificateur est connectée à une impédance de charge dont la valeur correspond sensiblement à la valeur d'impédance de ladite antenne, et
une unité de commande (18) pour simultanément commander la commutation dudit moyen de commutation de la première à la seconde position et commander l'envoi par ledit moyen d'émission d'un signal de linéarisation audit amplificateur de façon à ajuster les coefficients dudit circuit de boucle de réaction ;
de sorte qu'aucun signal n'est transmis vers ladite antenne pendant la phase de linéarisation dudit amplificateur tout en maintenant une impédance sensiblement constante à la sortie de l'amplificateur.

2. Dispositif de correction de linéarité selon la revendication 1, dans lequel ledit moyen de commutation (20) est un interrupteur à diodes ayant une position 1 connectant la sortie dudit amplificateur (14) à ladite antenne (10) et une position 2 connectant la sortie dudit amplificateur à la masse par l'intermédiaire d'une résistance (22) d'une valeur d'environ 50 ohms.

3. Dispositif de correction de linéarité selon la revendication 1, dans lequel ledit moyen de commutation comprend un circulateur (30) et un interrupteur (32) en position fermée lorsque le système est en mode communication et en position ouverte lorsque ladite unité de commande (18) procède à la phase de linéarisation, ledit circulateur dérivant le courant à la sortie dudit amplificateur vers une résistance d'une valeur d'environ 50 ohms reliée à la masse lorsque le système est en phase de linéarisation.

4. Dispositif de correction de linéarité selon la revendication 3, dans lequel ledit interrupteur (32) est une diode PIN.
